(19) Europäisches Patentamt
European Patent Office
Office européen des brevets

(11) **EP 4 439 411 A1**

(12) **EUROPEAN PATENT APPLICATION**

(43) Date of publication:
02.10.2024 Bulletin 2024/40

(51) International Patent Classification (IPC):
**G06Q 10/04** (2023.01)     **G06Q 50/06** (2024.01)

(21) Application number: 23220518.7

(22) Date of filing: 28.12.2023

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 28.03.2023   CN 202310318448

(71) Applicant: Sungrow (Shanghai) Co., Ltd.
Shanghai 201203 (CN)

(72) Inventors:
• LIU, Xing
  Hefei, Anhui, 230088 (CN)
• WEI, Zhengjia
  Hefei, Anhui, 230088 (CN)
• LU, Mengxuan
  Hefei, Anhui, 230088 (CN)

(74) Representative: Biallo, Dario et al
Barzanò & Zanardo Milano S.p.A.
Via Borgonuovo, 10
20121 Milano (IT)

(54) **METHOD AND APPARATUS FOR TRAINING SCHEDULING MODEL, ELECTRIC DEVICE AND STORAGE MEDIUM**

(57)     A method and an apparatus for training a scheduling model of an energy storage system, an electronic device and a storage medium are provided. The method includes: determining main reward data of the scheduling model based on payment data of the energy storage system for electricity in a period from a first moment to a second moment, where the first moment is earlier than the second moment; determining branch penalty data of the scheduling model based on deviation data of a charging-discharging action of the energy storage system in the period, where the deviation data of the charging-discharging action indicates to what extent the charging-discharging action matches a change in a state variable of the energy storage system; and updating parameters of the scheduling model based on the main reward data and the branch penalty data, to obtain a target scheduling model. The scheduling model trained in this way can converge with high precision.

Determine main reward data of a scheduling model based on payment data of the energy storage system for electricity in a period from a first moment to a second moment — S210

Determine branch penalty data of the scheduling model based on deviation data of a charging-discharging action of the energy storage system in the period — S220

Update parameters of the scheduling model based on the main reward data and the branch penalty data, to obtain a target scheduling model — S230

Figure 2

## Description

### FIELD

The present disclosure relates to the technical field of power scheduling, and in particular to a method and an apparatus for training a scheduling model of an energy storage system, an electronic device and a storage medium.

### BACKGROUND

In view of the fact that the electricity price and electricity consumption by electrical loads are variable, performing scheduling on an energy storage system based on a predetermined scheduling mechanism is of great significance, to minimize the electricity consumption by the electric loads for the purpose of reducing a payment for electricity.

In the conventional technology, the scheduling model is constructed using proximal policy optimization based on which global search is implementable. It is desired to improve the convergence for constructing the scheduling model using the proximal policy optimization, to adapt to the complex operation of the energy storage system.

### SUMMARY

The present disclosure aims to solving one of the technical problems in the relevant technology to some extent at least. Therefore, a method for training a scheduling model of an energy storage system is provided according to a first aspect of embodiments of the present disclosure, so that the scheduling model can converge with high precision.

The method includes: determining main reward data of the scheduling model based on payment data of the energy storage system for electricity in a period from a first moment to a second moment, where the first moment is earlier than the second moment; determining branch penalty data of the scheduling model based on deviation data of a charging-discharging action of the energy storage system in the period, where the deviation data of the charging-discharging action indicates to what extent the charging-discharging action matches a change in a state variable of the energy storage system; and updating parameters of the scheduling model based on the main reward data and the branch penalty data, to obtain a target scheduling model.

In some embodiments, the state variable includes a state of charge variable. The method further includes: determining deviation data of a state of charge action of the energy storage system between the first moment and the second moment based on first state of charge data of the state of charge variable at the first moment, second state of charge data of the state of charge variable at the second moment, and action data of an action variable of the energy storage system at the first moment, before the determining the branch penalty data. The deviation data of the charging-discharging action includes the deviation data of the state of charge action.

In some embodiments, the state variable includes an actual electricity price variable. The method further includes: determining deviation data of an electricity price action of the energy storage system between the first moment and the second moment based on first actual electricity price data of an actual electricity price variable at the first moment, second actual electricity price data of the actual electricity price variable at the second moment, and action data of an action variable of the energy storage system at the first moment, before the determining the branch penalty data. The deviation data of the charging-discharging action includes the deviation data of the electricity price action.

In some embodiments, the state variable includes an actual electricity price variable and a prediction electricity price variable. The method further includes: determining deviation data of an electricity price prediction action of the energy storage system between the first moment and the second moment based on prediction electricity price data of the prediction electricity price variable at the second moment, second actual electricity price data of the actual electricity price variable at the second moment, and action data of an action variable of the energy storage system at the first moment, before the determining the branch penalty data. The deviation data of the charging-discharging action includes the deviation data of the electricity price prediction action.

In some embodiments, the deviation data of the charging-discharging action includes deviation data of a state of charge action, deviation data of an electricity price action and deviation data of an electricity price prediction action. The determining the branch penalty data includes: acquiring a sum of the deviation data of the state of charge action multiplied by a first weight coefficient, the deviation data of the electricity price action multiplied by a second weight coefficient, and the deviation data of the electricity price prediction action multiplied by a third weight coefficient, as the branch penalty data.

In some embodiments, the state variable includes an actual electricity price variable and a load power variable. The method further includes: determining the payment data based on first actual electricity price data of the actual electricity price variable at the first moment, a first load power of the load power variable at the first moment, a second load power of the load power variable at the second moment, and action data of an action variable of the energy storage system at the first moment, before the determining the main reward data.

In some embodiments, the determining the main reward data includes: performing a multiplication operation based on the payment data and a corresponding fourth weight coefficient, to obtain the main reward data.

In some embodiments, the prediction electricity price data at the second moment is predicted by an electricity price prediction model. The electricity price prediction model is trained by: constructing a training sample set for an electricity price, where the training sample set includes multiple training samples each including previous electricity price data within a specified period of time, and the previous electricity price data has multiple feature variables including a daily maximum electricity price, a daily minimum electricity price, a daily average electricity price and a volatility in a daily electricity price; and training an initial prediction model using the training sample set, to obtain the electricity price prediction model. The initial prediction model is constructed using a long short-term memory network.

In some embodiments, the updating the parameters of the scheduling model includes: updating the parameters using a policy gradient and temporal difference learning by inputting the state variable and an action variable of the energy storage system into a value network and an action network of the scheduling model, aiming at maximizing a difference between the main reward data and the branch penalty data.

In some embodiments, the method further includes: determining an objective function and a constraint for a minimum payment; and constructing a reward function of proximal policy optimization based on the objective function and the constraint. The reward function includes a main reward function for outputting the main reward data and a branch penalty function for outputting the branch penalty data.

In some embodiments, the constraint includes a state of charge constraint and an actual output power constraint of the energy storage system. The state of charge constraint is constructed based on a maximum state of charge and a minimum state of charge. The actual output power constraint is constructed based on an actual output power of the energy storage system being less than or equal to a rated power of the energy storage system.

An apparatus for training a scheduling model of an energy storage system is provided according to a second aspect of embodiments of the present disclosure. The apparatus includes: a main reward data determination module, a branch penalty data determination module and a training module. The main reward data determination module is configured to determine main reward data of the scheduling model based on payment data of the energy storage system for electricity in a period from a first moment to a second moment. The first moment is earlier than the second moment. The branch penalty data determination module is configured to determine branch penalty data of the scheduling model based on deviation data of a charging-discharging action of the energy storage system in the period. The deviation data of the charging-discharging action indicates to what extent the charging-discharging action matches a change in a state variable of the energy storage system. The training module is configured to update parameters of the scheduling model based on the main reward data and the branch penalty data, to obtain a target scheduling model.

An electric device is provided according to a third aspect of embodiments of the present disclosure. The electric device includes a processor, a memory, and a computer program stored in the memory and executable by the processor. The processor is configured to execute the computer program to implement the method in the first aspect.

A computer readable storage media is provided according to a fourth aspect of embodiments of the present disclosure. The computer readable storage medium includes a computer program that, when executed, controls a device where the computer readable storage medium is arranged to perform the method in the first aspect.

In the above embodiments, the parameters of the initial scheduling model are updated based on the branch penalty data in addition to the main reward data that aims at the minimum payment, to reduce the interference from the change in the state variable in the environment where the energy storage system is located. Therefore, the scheduling model can be trained excellently. The parameters of the scheduling model are updated iteratively based on the instant reward data including the main reward data and the branch penalty data, so that the scheduling model can converge with high precision quickly. Therefore, an excellent target scheduling model can be obtained.

Additional aspects and advantages of the present disclosure are set forth in the description below, and therefore can be clear from the description or learned by practice of the present disclosure.

**BRIEF DESCRIPTION OF THE DRAWINGS**

Figure 1a is a schematic diagram illustrating a system for training a scheduling model for an energy storage system according to an embodiment of the present disclosure;

Figure 1b is a schematic diagram illustrating a household storage system according to an embodiment of the present disclosure;

Figure 2 is a flow chart illustrating a method for training the scheduling model according to an embodiment of the present disclosure;

Figure 3 is a flow chart illustrating a method for training an electricity price prediction model according to an embodiment of the present disclosure;

Figure 4 is a schematic structural diagram illustrating a long short-term memory network according to an embodiment of the present disclosure;

Figure 5 is a flow chart illustrating the method for training the scheduling model according to another embodiment of the present disclosure;

Figure 6 is a schematic structure diagram illustrating an apparatus for training the scheduling model according to an embodiment of the present disclosure; and

Figure 7 is a schematic structural diagram illustrating an electric device according to an embodiment of the present disclosure.

## DETAILED DESCRIPTION

Embodiments of the present disclosure are described in detail hereinafter. Examples of the embodiments are shown in the drawings, throughout which the same or similar reference numerals represent the same or similar elements or represent elements having the same or similar functions. The embodiments described below with reference to the drawings are exemplary and for explaining the present disclosure, and should not be construed to limit the present disclosure.

The energy storage system includes a range of objects to determine a target when analyzing the process of energy storage. The energy storage system generally involves diverse energies, various devices, substances and processes, and is a complex energy system that changes over time.

The storage system involved in the present disclosure is a power storage system. The energy storage system can implement peak-cut, and therefore is used increasingly to adapt to the variable electricity price. However, it is difficult to optimize economic benefits in real time by regulating the power of the energy storage system due to the simple approach to the peak-out. Therefore, several scheduling models are constructed for the energy storage system to obtain an optimal scheduling approach in the conventional technology. Heuristic algorithm commonly used in the several scheduling models is likely stuck in a local optimum, resulting in limited speeds and precision of convergence of the models. Unlike the heuristic algorithm, the proximal policy optimization is increasingly applied in the scheduling model of the energy storage system due to its advantages of global search. The proximal policy optimization can get out of the predicament that the heuristic optimization algorithm is in, to achieve a globally optimal solution to the power scheduling of the energy storage system, thereby increasing the economic benefits of the energy storage system and increasing the return on investment of the energy storage system accordingly. However, since the operation of the energy storage system is complex, the training of the scheduling model using the proximal policy optimization is prone to deviation due to interferences from various factors such as the charging-discharging action, the electricity price, the state of charge, resulting in low precision in convergence of scheduling model.

Therefore, a method and an apparatus for training a scheduling model, an electronic device and a storage medium are provided in the present disclosure, to improve the precision in convergence of the scheduling model without affecting the rate of convergence. In the embodiments of the present disclosure, main reward data of the scheduling model is determined based on payment data of the energy storage system for electricity in a period from a first moment to a second moment. The first moment is earlier than the second moment. Branch penalty data of the scheduling model is determined based on deviation data of the charging-discharging action of the energy storage system in this period. The deviation data indicates to what extent the charging-discharging action matches a change in a state variable of the energy storage system. Parameters of the scheduling model are updated based on the main reward data and the branch penalty data, to obtain a target scheduling model.

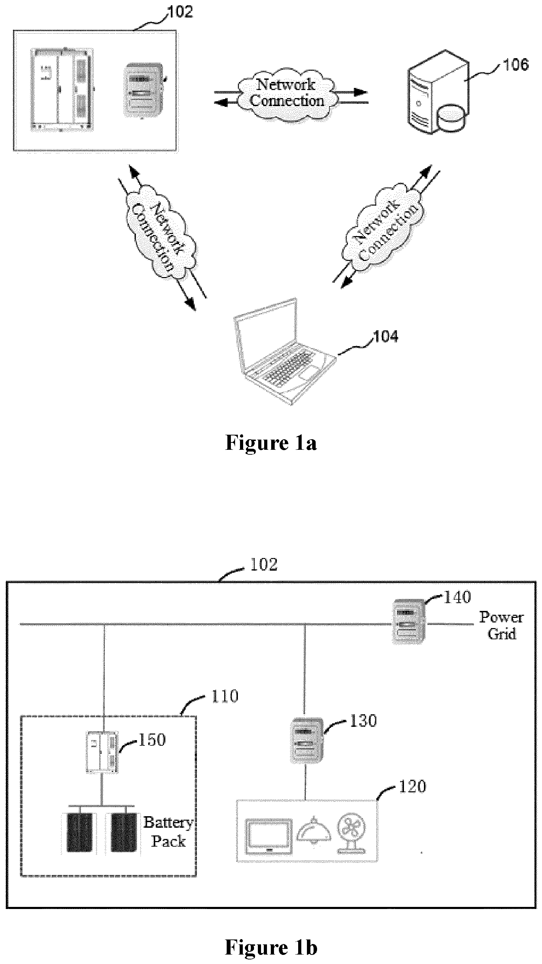

An example scenario of the method for training the scheduling model for an energy storage system, for example, a household energy storage system, is described in the embodiments of the present disclosure. The method is appliable to a system for training the scheduling model as shown in Figure 1a. The system for training the scheduling model includes a household energy storage system 102, a client 104, and a server 106. The server is configured to train the scheduling model. In the example scenario, the scheduling model is constructed using the proximal policy optimization.

The household energy storage system 102, as shown in Figure 1b, includes at least an energy storage system 110 and a household electric load 120. The electric load 120 is connected with a meter 130. A product of a current measured by the meter and a power source voltage is calculated as load power of the electric load. The energy storage system is usually equipped with a local controller 150. The local controller 150 is configured to acquire output data of the energy storage system and determine the state of charge of the energy storage system. The output data includes output power of the energy storage system. An on-grid meter 140 is generally arranged at a junction on a bus where the energy storage system is connected to a power grid.

In this example scenario, the household energy storage system is communicably connected with the server, to provide the server with sample data for training the scheduling model. The sample data includes a state variable of the energy storage system and an action variable of the energy storage system. The state variable includes a state of charge variable, an actual electricity price variable, a prediction electricity price variable and a load power variable. The action variable of the energy storage system represents the charge-discharging action of the energy storage system.

The server inputs the state variable and the action variable of the sample data into a value network and an action network of the scheduling model. The payment data of the energy storage system for electricity between the first moment and the second moment is determined based on the state variable and the action variable. The main reward data of the scheduling model is determined based on the payment data. The first moment is earlier than the second moment. A scheduling interval in a scheduling cycle, for example, begins at the first moment and ends at the second moment. Similarly, the deviation data of charging-discharging action of the energy storage system in the period between the first moment and the second moment is determined based on the state variable and the action variable. The branch penalty data of the scheduling model is determined based on the deviation data of the charging-discharging action. The deviation data of the charging-discharging action indicates to what extent the charging-discharging action of the energy storage system matches a change in a state variable of the energy storage system. The main reward data aims at a minimum payment for electricity. The branch penalty data amins to guarantee that the charging-discharging action of the energy storage system matches the state variable, in order to prevent an increase in the payment for electricity due to the failure to achieve optimal economic benefits of the energy storage system resulted from undesired actions or slight charging-discharging actions.

Then, the parameters of the scheduling model are updated by using the policy gradient and temporal difference learning, aiming at maximizing the difference between the main reward data and the branch penalty data. The scheduling model is iteratively updated as described above, until the model converges, and the target scheduling model is obtained. In this example scenario, the trained target scheduling model is deployed on the client.

In this example scenario, the target scheduling model is deployed on the client. The client is communicably connected with the household energy storage system to receive the state variable of the household storage system at the current moment, as an input of the target scheduling model to obtain the scheduling approach for the next scheduling interval. The scheduling approach includes the action variable of the energy storage system. The client performs powering scheduling on the energy storage system based on the scheduling approach, to optimize the economic benefits of the energy storage system. Therefore, the payment for electricity is minimized.

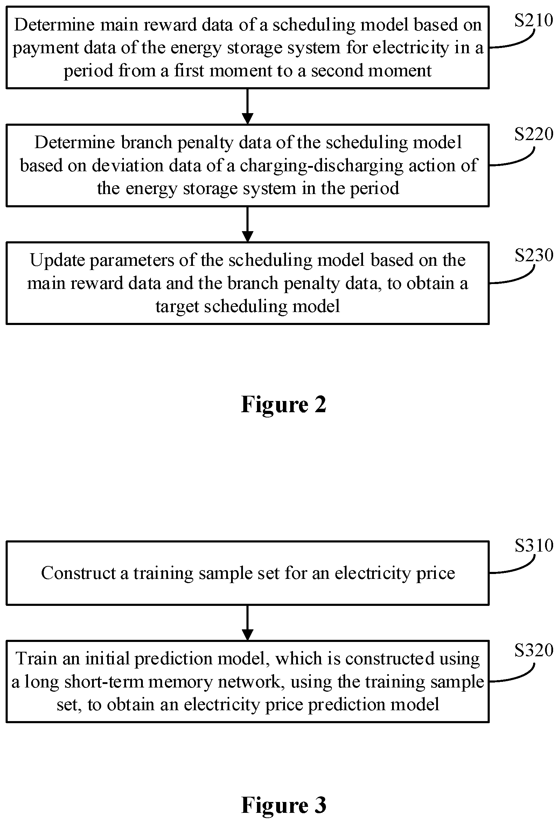

A method for training the scheduling model is provided according to an embodiment of the present disclosure. Referring to Figure 2, the method includes the following steps S210 to S230.

In S210, main reward data of the scheduling model is determined based on payment data of the energy storage system for electricity in a period from a first moment to a second moment.

The first moment is earlier than the second moment.

In S220, branch penalty data of the scheduling model is determined based on deviation data of a charging-discharging action of the energy storage system in the period.

The deviation data indicates to what extent the charging-discharging action matches a change in a state variable of the energy storage system.

In S230, parameters of the scheduling model are updated based on the main reward data and the branch penalty data, to obtain a target scheduling model.

In the embodiments of the present disclosure, the initial scheduling model is constructed using the proximal policy optimization based on an actual environment where the energy storage system is located. The scheduling cycle of the energy storage system is determined based on actual demands. For example, for the household energy storage system, the scheduling cycle is generally set to one day. In the scheduling cycle, the power scheduling is performed on the energy storage system multiple times. The scheduling interval is determined based on a scheduling frequency with which the power scheduling is performed on the energy storage system. For example, the scheduling cycle is set to one day, and the scheduling interval is determined as 15 minutes based on a preset scheduling frequency. Therefore, the power scheduling is performed on the energy storage system 95 times within the scheduling cycle. That is, the power scheduling is performed the energy storage system at 15-minute intervals.

Therefore, when training the scheduling model, parameters of the scheduling model are updated based on the data related to the scheduling interval that serves as the sample data. The scheduling interval begins at the first moment and ends at the second moment. The first moment is earlier than the second moment.

When training the scheduling model, the energy storage system is considered as an intelligent agent in the deep reinforcement learning. The intelligent agent performs the optimal action to interact with its environment, and then an instant reward and a next state variable are obtained. The current state variable, the optimal action variable, the instant reward, and the next state variable constitute a transfer of knowledge, which is stored in the buffer.

For the household energy storage system, the power scheduling mainly aims at minimizing the payment for electricity. The instant reward is determined from a reward function of the scheduling model, and represents a payment for electricity within one scheduling interval. Therefore, when updating the parameters of the scheduling model based on the instant reward, the parameters are modified aiming at maximizing or minimizing the instant reward by setting the reward function.

In the embodiments of the present disclosure, the instant reward is determined based on the main reward data and the branch penalty data. The main reward data is determined based on the payment data between the first moment and second moment, that is, within the scheduling interval. The main reward data aims at the minimum payment for electricity. For example, the main reward data is determined based on payment data within one scheduling interval in a scheduling cycle (for example, one day), to minimize the payment within the scheduling cycle. As long as the payment data represented by the main reward data corresponding to each scheduling interval is minimized, the payment data within the entire scheduling cycle can be minimized.

However, in some cases, the determination of the optimal action in the next scheduling interval performed by the scheduling model is prone to interference from other data, for example, a change in the state of charge, a change in the electricity price and the degree of accuracy in the predicted electricity price, resulting in failure to obtain the optimal scheduling approach. The determining the instant reward based on only the main reward data may result in low precision and speed in convergence of scheduling model. In view of this, the branch penalty data is added in the embodiments of the present disclosure to reduce the influence of other data on the charging-discharging action of the energy storage system.

The branch penalty data is determined based on the deviation data of the charging-discharging action between the first moment and the second moment. The deviation data is determined by the state variables that affect the relevant environment of the energy storage system. The state variables include, for example, the state of charge variable, an electricity price variable at a moment before the current scheduling interval, an electricity price variable at a moment after the current scheduling interval, and a prediction electricity price variable at the next moment. The deviation data indicates to what extent the charging-discharging action of the energy storage system matches the change in the state variable of the energy storage system. The branch penalty data is added to the main reward data, the charging-discharging action of the energy storage system can match the change in the state variable of the energy storage system, and therefore the scheduling model can be trained with precise convergence. Accordingly, the scheduling model can acquire the optimal scheduling approach, the payment for electricity can be minimized, and then the economic benefits of the energy storage system can be maximized.

The parameters of the initial scheduling model are updated based on the branch penalty data in addition to the main reward data that aims at the minimum payment, to reduce the interference from the change in the state variable in the environment where the energy storage system is located. Therefore, the scheduling model can be trained excellently. The parameters of the scheduling model are updated iteratively based on the instant reward data including the main reward data and the branch penalty data, so that the scheduling model can converge with high precision quickly. Therefore, an excellent target scheduling model can be obtained.

In some embodiments of the present disclosure, the state variable of the energy storage system includes the state of charge variable. Before the branch penalty data is determined, deviation data of a state of charge action between the first moment and the second moment is determined based on first state of charge data of the state of charge variable at the first moment, second state of charge data of the state of charge variable at the second moment, and action data of the action variable at the first moment.

In the embodiments of the present disclosure, the deviation data of the charging-discharging action includes the deviation data of the state of charge action. The state variable relates to the environment for deep reinforcement learning, and includes the state of charge variable. The state of charge variable represents SOC data of the energy storage system over time. $soc_t$ indicates the SOC data of the energy storage system at a moment t. The action variable represents the charging-discharging action of the energy storage system over time. $a_t$ represents the action data of the energy storage system at the moment t. Positive action data indicates that the energy storage system is charged, and negative action data indicates that the energy storage system is discharged. In general, $a_t$ ranges from -1 to 1 inclusive.

In some cases, the change in the state of charge of the energy storage system does not match the charging-discharging action in a scheduling interval, and then the energy storage system likely performs a slight charging-discharging action that is undesired.

Therefore, the deviation data of the state of charge action within the scheduling interval between the first moment and the second moment is determined based on the state of charge variable and the action variable within the scheduling interval. A difference between the first state of charge data and the second state of charge data is calculated, and is multiplied by the action data of the action variable at the first moment to obtain a product. Whether the charging-discharging action in the scheduling interval matches the change in the state of charge of the energy storage system is determined based on the product.

The first state of charge data is represented as $soc_t$, the second state of charge data is represented as $soc_{t+1}$.

Accordingly, the action data of the action variable of the energy storage system at the first moment is represented as $a_t$. The deviation data of the state of charge action between the first moment and the second moment is determined based on the product $(soc_t - soc_{t+1})*a_t$. The penalty data, i.e., the deviation data of the state of charge action is added, for control the charging-discharging action to match the change in the state of charge. Therefore, the slight charging-discharging action can be avoided, the payment for electricity can be reduced and the benefits of the energy storage system can be increased accordingly.

In some embodiments of the present disclosure, the state variable of the energy storage system includes an actual electricity price variable. Before the branch penalty data is determined, deviation data of an electricity price action between the first moment and the second moment is determined based on first actual electricity price data of the actual electricity price variable at the first moment, second actual electricity price data of the actual electricity price variable at the second moment, and the action data of the action variable of the energy storage system at the first moment. The deviation data of the charging-discharging action includes the deviation data of the electricity price action.

In the embodiments of the present disclosure, the deviation data of the charging-discharging action includes the deviation data of the electricity price action. The state variable relates to the environment for the deep reinforcement learning, and includes the actual electricity price variable. The actual electricity price variable represents the actual electricity price data over time. $price_t$ represents the actual electricity price data of the actual electricity price variable at the moment t.

In some cases, the scheduling on the charging-discharging action of the energy storage system mainly depends on a change in the actual electricity price. In case of an increase in the electricity price, the energy storage system is preferably charged, to supply power to an electric load. Therefore, the penalty data, i.e., the deviation data of the electricity price action is added, to control the optimal action that the energy storage system is to perform matches the change in the actual electricity price.

A difference between the first actual electricity price data and the second actual electricity price data is calculated and is multiplied by the action data of the action variable of the energy storage system at the first moment to obtain a product. Whether the optimal action that the energy storage system is to perform matches the change in the actual electricity price is determined based on the product.

The first actual electricity price data is represented as $price_t$, the second actual electricity price data is represented as $price_{t+1}$. The deviation data of the electricity price action between the first moment and the first moment is determined based on the product $(price_t - price_{t+1})*a_t$. The deviation data of the electricity price action is added, to control the optimal action that the energy storage system is to perform matches the change in the electricity price action.

In some embodiments of the present disclosure, the state variable of the energy storage system includes the actual electricity price variable and a prediction electricity price variable. Before the branch penalty data is determined, deviation data of an electricity price prediction action between the first moment and the second moment is determined based on prediction electricity price data of the prediction electricity price variable at the second moment, the second actual electricity price data of the actual electricity price variable at the second moment, and the action data of the action variable of the energy storage system at the first moment. The deviation data of the charging-discharging action includes the deviation data of the electricity price prediction action.

In the embodiments of the present disclosure, the deviation data of the charging-discharging action includes the deviation data of the electricity price prediction action. The state variable relates to the environment for the deep reinforcement learning, and includes the prediction electricity price variable. The prediction electricity price variable represents the prediction electricity price data at the next moment. $price^{\wedge}_{t+1}$ represents the electricity price data for the subsequent moment predicted at the moment t.

In some cases, the prediction electricity price data is predicted by an electricity price prediction model based on previous electricity price data, and is likely accurate. A large difference between the prediction electricity price data and the actual electricity price data at the same moment may result in undesired charging-discharging action of the energy storage system, which can be avoided by adding the deviation data of the electricity price prediction action.

An absolute difference between the prediction electricity price data of the prediction electricity price variable at the second moment and the second actual electricity price data of the actual electricity price variable at the second moment is calculated, and is multiplied by the action data of the action variable of the energy storage system at the first moment to obtain a product. The penalty data about the prediction electricity price action is constituted based on the product, to prevent the undesired charging-discharging action.

The second actual electricity price data of the actual electricity price variable at the second moment is represented as $price_{t+1}$. The prediction electricity price data of the prediction electricity price variable at the second moment is represented as $price^{\wedge}_{t+1}$. The deviation data of the electricity price prediction action is determined based on the

product $| price^{\wedge}_{t+1} - price_{t+1} | \times a_t$ .

In some embodiments of the present disclosure, the branch penalty data of the scheduling model is determined as follows. The deviation data of the state of charge action multiplied by a first weight coefficient, the deviation data of the electricity price action multiplied by a second weight coefficient, and the deviation data of the electricity price prediction action multiplied by a third weight coefficient are added to obtain a sum, as the branch penalty data.

In the embodiments of the present disclosure, the deviation data of charging-discharging action includes the deviation data of the state of charge action, the deviation data of the electricity price action and the deviation data of the electricity price prediction action, which are determined as three pieces of penalty data of the scheduling model. When determining the branch penalty data based on the three pieces of penalty data, respective weight coefficients are set for the three pieces of penalty data based on the environment where the energy storage system is located for purpose of respective emphases.

The branch penalty data is represented as $r_{branch}$, and is calculated from the equation

$$r_{branch} = \alpha_2 \times [(soc_t - soc_{t+1}) \times a_t] + \alpha_3 \times [(price_{t+1} - price_t) \times a_t] + \alpha_4 \times (| price^{\wedge}_{t+1} - price_{t+1} | \times a_t)$$

. $a_2$ represents the first weight coefficient. $a_3$ represents the second weight coefficient. $a_4$ represents the third weight coefficient.

In some embodiments of the present disclosure, the state variable includes the actual electricity price variable and a load power variable. Before the main reward data is determined, the payment data is determined based on first actual electricity price data of the actual electricity price variable at the first moment, a first load power of the load power variable at the first moment, a second load power of the load power variable at the second moment, and the action data of the action variable at the first moment.

In the embodiments of the present disclosure, the state variable includes the actual electricity price variable and the load power variable. The load power variable indicates load power of the electric load over time.

The payment data is determined based on a product of the electricity consumption and the electricity price. In the embodiments of the present disclosure, the electricity consumption in a scheduling interval is determined first in order to determine the payment data in a scheduling interval. The electricity consumption is determined based on the load power and a duration in which the electric load consumes electricity. The duration is equal to the scheduling interval. The load power of the electric load is determined based on the first load power, the second load power, and the action data of the action variable at the first moment.

The first load power and the second load power are measured by the meter. Since the load powers at the first and second moments are insufficient to represent the load power over the entire scheduling interval, an average of the first load power and the second load power is calculated as the load power of over the entire scheduling interval in case of no external power. In some cases, the charging-discharging action directly influences the load power. Therefore, the influence on the load power is determined based on the action data of the energy storage system in this scheduling interval. The action data $a_t$ of the energy storage system at the first moment represents the charging-discharging action of the energy storage system in the scheduling interval. The influence on the load power is determined based on a product of a rated power $p_{ess}$ of the energy storage system and the action data $a_t$. Therefore, the load power in the scheduling interval is expressed as

$$\frac{p_{load,t} + p_{load,t+1}}{2} + p_{ess} \times a_t$$

. $p_{load,t}$ represents the first load power. $p_{load,t+1}$ represents the second load power.

$\Delta t$ denotes the scheduling interval. the payment data in this scheduling interval is expressed as

$$(\frac{p_{load,t} + p_{load,t+1}}{2} + P_{ess} \times a_t) \times \Delta t \times price_t$$

.

In some embodiments of the present disclosure, the main reward data is determined as follows. A multiplication operation is performed based on the payment data and a corresponding fourth weight coefficient, to obtain the main reward data.

In the embodiments of the present disclosure, the main reward data and the branch penalty data constitute the instant reward for training the scheduling model. The three pieces of penalty data for determining the branch penalty data are provided with weight coefficients, respectively. Similarly, the payment data for determining the main reward data is also provided with a weight coefficient based on its degree of importance. Then, the payment data is multiplied by the fourth weight coefficient, to obtain the main reward data.

In some embodiment of the present disclosure, the main reward data aims at the minimum payment for electricity, and the parameters of the scheduling model are updated based on the instant reward aiming at maximizing the reward.

Therefore, an additive inverse of the payment data is multiplied by the fourth weight coefficient to obtain the main reward data.

The main reward data is calculated from an equation

$$r_{master} = \alpha_1 \times [-(\frac{p_{load,t} + p_{load,t+1}}{2} + P_{ess} \times a_t) \times \Delta t \times price_t]$$

. $a_1$ represents the fourth weight coefficient.

In some embodiments of the present disclosure, the prediction electricity price data at the second moment is predicted by the electricity price prediction model. Referring to Figure 3, the electricity price prediction model is trained by the following steps S310 to S320.

In S310, a training sample set for the electricity price is constructed.

In S320, the initial prediction model is trained using the training sample set, to obtain the electricity price prediction model. The initial prediction model is constructed using a long short-term memory network.

The prediction electricity price variable is included in the state variable of the scheduling model. The initial prediction model is constructed using the long short-term memory (LSTM) network in the deep learning according to the embodiments of the present disclosure, so that the prediction electricity price data is accurate and the intelligent agent can accurately perceive its environment in the training process.

The training sample set for the electricity price is constructed. The training sample set includes multiple training samples. The training sample includes previous electricity price data within a specified period of time previous to a prediction moment at which the electricity price is to be predicted. For example, the training sample includes electricity price data over the past 30 days.

In the embodiments of the present disclosure, the previous electricity price data includes at least the previous real electricity price data within the specified period of time. In order to improve the accuracy of the prediction, multiple feature variables are constructed based on the previous real electricity price data within the specified period of time. For example, the multiple feature variables include a daily maximum electricity price, a daily minimum electricity price, a daily average electricity price and a volatility in the daily electricity price within the specified period of time. The training sample includes the previous real electricity price data and multiple constructed feature variables within the specified period of time. In addition, the training sample further includes a time variable, for example, a date variable and a date type representing a working day or a non-working day, within the specified period of time.

The long short-term memory network is trained iteratively based on the Keras, by inputting the constructed training sample set and outputting the prediction electricity price data, until a set termination condition is meet, for example, the iterations reach a set number, to obtain the electricity price prediction model. The initial prediction model is trained with the real electricity price data at the prediction moment previous to the current moment serving as the prediction electricity price data at the prediction moment.

The prediction electricity price data at the prediction moment is acquired, by the electricity price prediction model trained from deep learning, based on the previous real electricity price data, the multiple feature variables and the time variable within the specified period of time previous to prediction moment.

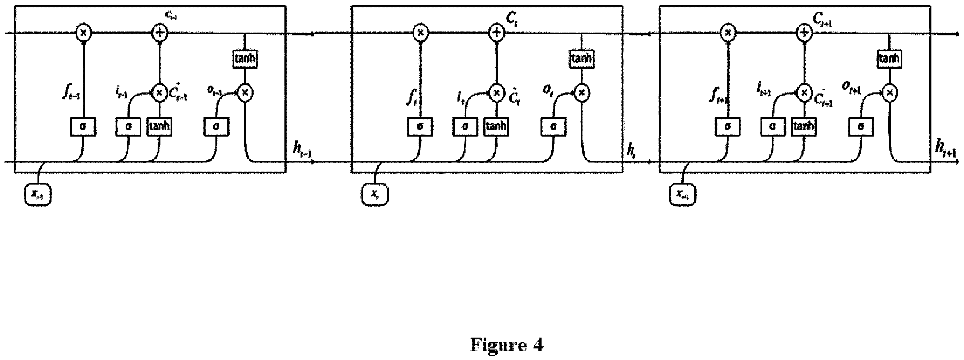

Details about the long short-term memory network is described below in conjunction with Figure 4. Referring to Figure 4, the long short-term memory (LSTM) network is an improved structure of a recurrent neural network (RNN). A unit C capable of storing a long-term state is added in a hidden layer, and therefore the LSTM network is capable of long-term memory. Further, the vanishing gradient problem can be successfully avoided, and the LSTM network is capable of time series forecasting.

An input vector $X_t$ at a current moment, a unit state $C_{t-1}$ at a previous moment, and a hidden layer state $h_{t-1}$ at the previous moment are inputted into the LSTM unit, to output a unit state $Ct$ and a hidden layer state $h$ at the current moment. The LSTM unit includes a forget gate $f_t$, an input gate $i_t$ and an output gate $ot$ for regulating the flow of information into and out of its cell.

The forget gate $f_t$ is expressed as $f_t = \sigma(W_f[h_{t-1},x_t]+b_f)$. The input gate $i_t$ is expressed as $i_t = \sigma(W_i \cdot [h_{t-1},x_t]+b_i)$. The output gate $ot$ is expressed as $o_t = \sigma(W_o \cdot [h_{t-1},x_t]+b_0)$. $W_f$, $W_i$, and $W_o$ represent weight matrices of the forget gate, the input gate and the output gate, respectively. $[h_{t-1}, x_t]$ represents connection of the these two vectors $h_{t-1}$ and $x_t$ into a longer vector. $b_f$, $b_i$, and $b_o$ represent bias vectors of the forget gate, the input gate and the output gate, respectively. $\sigma$ represents the Sigmoid function, which indictaes the conversion of the output into an interval ranging from 0 to 1 inclusive. The above training samples form the input vector $X_t$.

The unit state $C_t$ at the current moment is calculated based on the unit state $C_{t-1}$ at the previous moment and a currently inputted intermediate state, tanth represents a hyperbolic tangent function that indictaes the conversion of the output into an interval ranging from -1 to 1 inclusive. * represents the Hadamard product. $\overline{C}_t$ represents a temporary state, $W_c$ and $b_c$ represent a weight matrix and a bias vector of the tanh layer. Calculations are as follows.

$$\tilde{C}_t = \tanh\left(W_C \cdot [h_{t\text{-}1}, x_t] + b_C\right)$$

$$C_t = f_t * C_{t-1} + i_t * \tilde{C}_t$$

The output $h_t$ of the LSTM unit at the current moment is represented as $h_t = o_t * \tanh(C_t)$.

The LSTM model is trained based on backpropagation. An error of the hidden layer state $h_{t-1}$ depends on $h_t$. The unit state $C_{t-1}$ depends $Ct$. The error of $C_t$ includes $C_{t+1}$ and $h_t$. $h_{t+1}$ is considered when $h_t$ is updated. In this way, the gradient at a moment is calculated from moment t backwards, and the weight coefficient is updated using stochastic gradient descent.

According to the above embodiments, the electricity price prediction model embedded with deep learning predicts the prediction electricity price data at the second moment. The prediction electricity price data is included in the state variable for training scheduling model. Therefore, the intelligent agent can accurately perceive its environment, and accordingly the stability and adaptability of the scheduling model are improved.

In some embodiments of the present disclosure, the parameters of the scheduling model are updated based on the main reward data and the branch penalty data as follows. The state variable and the action variable of the energy storage system are inputted into the value network and the action network of the scheduling model. The parameters of the scheduling model are updated using the policy gradient and temporal difference learning, aiming at maximizing the difference between the main reward data and the branch penalty data.

In the embodiments of the present disclosure, a state observation space, an action space and the reward function are constructed for the proximal policy optimization, before the initial scheduling model is constructed using the proximal policy optimization.

The state observation space is used to acquire the state variable for training the initial scheduling model. The state variable includes the load power variable, the actual electricity price variable, the prediction electricity price variable, and the state of charge variable of the energy storage system. The state variable that is to be inputted into the scheduling model, includes the load power at the first moment, the actual electricity price data at the first moment, the prediction electricity price data at the second moment, and the state of charge data of the energy storage system at the first moment, i.e., $s_t = \{p_{load,t}, price_t, price^\wedge_{t+1}, soc_t\}$. $s_t$ represents the state variable.

The action space is used to determine a range of the action variable of the energy storage system. $a_t$ ranges from -1 to 1 inclusive. Positive action data $a_t$ indicates that the energy storage system is charged, and the negative action data $a_t$ indicates that the energy storage system is discharged.

The difference between the main reward data and the branch penalty data is the solution to the reward function, that is, the instant reward. The instant reward is determined by the model based on the reward function, by inputting the state variable and the action variable into the value network and action network.

In the embodiments of the present disclosure, the main reward data is determined based on the product of additive inverse of the payment data and the fourth weight coefficient. The scheduling model is constructed aiming at minimizing the payment for electricity. In view of this, the parameters of the scheduling model are updated using the policy gradient and temporal difference learning, aiming at maximizing the instant reward, i.e., the difference between the main reward data and the branch penalty data.

The energy storage system serves as the intelligent agent in deep reinforcement learning. The intelligent agent performs the optimal action $a_t$ to interact with its environment, and then the instant reward and the next state variable are obtained. The next state variable is represented by $s_{t+1} = \{p_{load,t+1}, price_{t+1}, price^\wedge_{t+2}, soc_{t+1}\}$. The current state variable, the optimal action variable $a_t$, the instant reward, and the next state variable constitute the transfer of knowledge, which is stored in the buffer. The $SOC_{t+1}$ in the next state variable is determined from the following equation.

$$soc_{t+1} = \begin{cases} \min(soc_t + P_{ess} \times a_t \times \eta_{charge} \times \Delta t / E_{ess}, soc_{max}), a_t \geq 0 \\ \max(soc_{min}, soc_t + P_{ess} \times a_t / \eta_{discharge} \times \Delta t / E_{ess}), a_t < 0 \end{cases}$$

$\eta_{charge}$ represents the charging efficiency of the energy storage system. $E_{ess}$ represents the rated capacity of the energy

storage system. $SOC_{max}$ represents a maximum state of charge of the energy storage system. $SOC_{min}$ represents a minimum state of charge of the energy storage system. $\eta_{discharge}$ represents the discharging efficiency of the energy storage system.

In some embodiments of the present disclosure, the method further includes: determining an objective function and a constraint for the minimum payment of the scheduling model. The reward function of the proximal policy optimization is constructed based on the objective function and the constraint. The reward function includes a main reward function for outputting the main reward data and a branch penalty function for outputting the branch penalty data.

The objective function and the constraint of the scheduling model are constructed based on the actual power environment of the energy storage system and the minimum payment, before the scheduling model is constructed.

In the embodiments of the present disclosure, the payment for electricity within the scheduling cycle aims for the minimum. For example, a scheduling cycle is one day. The objective function is constructed aiming at minimizing the payment for one day. The scheduling interval $\Delta t$ in the scheduling cycle is determined based on the scheduling frequency. Based on the determination of the payment data, the objective function is constructed as min

$$f(\{a_t\}) = \sum_{t=n}^{T} (\frac{p_{load,t} + p_{load,t+1}}{2} + p_{ess} \times a_t) \times \Delta t \times price_t$$

. T represents the number of times that the scheduling is performed in the scheduling cycle. For example, the scheduling interval $\Delta t$ is determined as 15 minutes. Therefore, 24 hours, i.e., one day includes 96 scheduling intervals $\Delta t$. That is, T is equal to 96.

The objective function represents the minimum payment in the scheduling cycle. The main reward function represents the payment data within the scheduling interval. Therefore, the main reward function in the reward function is constructed as $$r_{master} = \alpha_1 \times [-(\frac{p_{load,t} + p_{load,t+1}}{2} + P_{ess} \times a_t) \times \Delta t \times price_t]$$ based on the objective function. Further, the branch penalty function is determined, based on the three pieces of penalty data, as

$$r_{branch} = \alpha_2 \times [(soc_t - soc_{t+1}) \times a_t] + \alpha_3 \times [(price_{t+1} - price_t) \times a_t] + \alpha_4 \times (| price_{t+1}^{\wedge} - price_{t+1} | \times a_t)$$

.

The solution to the reward function is determined by the difference between the main reward data and the branch penalty data, and then the reward function is represented as $r_t = r_{master} - r_{branch}$. In the process of training the scheduling model, the main reward data is acquired from the main reward function based on the inputted state variable and the inputted action variable. The branch reward data is acquired from the branch reward function based on the inputted state variable and the inputted action variable.

In some embodiments of the present disclosure, the constraint includes a state of charge constraint and an actual output power constraint. The state of charge constraint is constructed based on $SOC_{max}$ and $SOC_{min}$. The actual output power constraint is constructed based on the actual output power of the energy storage system being less than or equal to the rated power of the energy storage system.

The actual output power is determined based on a product of the rated power $P_{ess}$ and the action variable $a_t$. The absolute value of the actual output power is less than the rated power $P_{ess}$.

The constraint of the scheduling model is expressed as follows.

$$s.t. \begin{cases} \forall t, soc_{min} \leq soc_t \leq soc_{max} \\ \forall t, | P_{ess} \times a_t | \leq P_{ess} \end{cases}$$

In the embodiments of the present disclosure, the constraint is used to constrain the calculation of the reward function.

It should be noted that, the scheduling model according to the embodiments of the present disclosure is applicable to the energy storage system with no photovoltaic system. For the energy storage system with a photovoltaic system, the load power variable in the state variable further includes power data related to photovoltaic power generation.

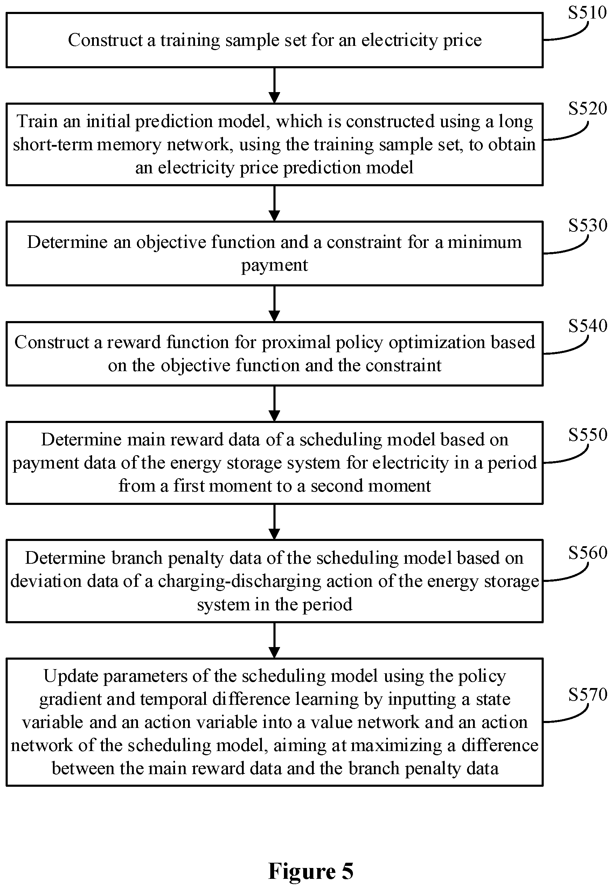

Referring to Figure 5, the method for training the scheduling model further includes the following steps S510 to S570, according to some embodiments of the present disclosure.

In S510, the training sample set for the electricity price is constructed.

In S520, the initial prediction model is trained using the training sample set, to obtain the electricity price prediction model.

In S530, the objective function and the constraint for the minimum payment are constructed.

In S540, the reward function for the proximal policy optimization is constructed based on the objective function and the constraint.

The reward function includes the main reward function for outputting the main reward data and the branch penalty function for outputting the branch penalty data.

In S550, the main reward data of the scheduling model is determined based on the payment data of the energy storage system for electricity between the first moment and the second moment.

In S560, the branch penalty data of the scheduling model is determined based on the deviation data of the charging-discharging action of the energy storage system between the first moment and the second moment.

In S570, the parameters of the scheduling model are updated using the policy gradient and temporal difference learning by inputting the state variable and the action variable into the value network and an action network, aiming at maximizing the difference between the main reward data and the branch penalty data.

In some embodiments, the energy storage system includes no photovoltaic system. First, the previous real electricity price data and the load power data over the past year are acquired. Feature variables, e.g., including a daily maximum electricity price, a daily minimum electricity price, a daily average electricity price and a volatility in the daily electricity price over the past 90 days, are constructed, to obtain an input set and output set for training the model. The input set includes the time variable, the previous real electricity price data over the past 90 days and the constructed characteristic variables. The output set includes the electricity price of the next scheduling cycle. The model is trained based on the LSTM (long short-term memory) neural network in the deep learning.

It is assumed that the long short-term memory network is updated at 30-day intervals. That is, the electricity price prediction model is updated every 30 days.

The environment for the deep reinforcement learning is built in the Python language. The state observation space, the action space and the reward function are constructed, as detailed in the above embodiments. The scheduling model is iteratively trained using the policy gradient and the temporal difference learning. The optimal trained model is saved, as the target scheduling model. When scheduling is actually performed with the scheduling model, the real-time state variable is inputted into the scheduling model. The energy storage system is intelligently regulated based on the output of the model.

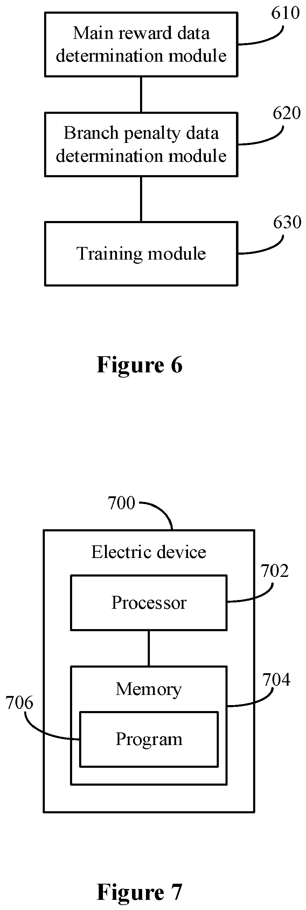

Corresponding to the foregoing embodiments, an apparatus for training the scheduling model is further provided according to embodiments of the present disclosure. Referring to Figure 6, the apparatus includes a main reward data determination module 610, a branch penalty data determination module 620 and a training module 630.

The main reward data determination module 610 is configured to determine main reward data of the scheduling model based on payment data of the energy storage system for electricity in a period from a first moment to a second moment.

The first moment is earlier than the second moment.

The branch penalty data determination module 620 is configured to determine branch penalty data of the scheduling model based on deviation data of a charging-discharging action of the energy storage system in the period.

The deviation data indicates to what extent the charging-discharging action matches a change in a state variable of the energy storage system.

The training module 630 is configured to update parameters of the scheduling model based on the main reward data and the branch penalty data, to obtain a target scheduling model.

With the apparatus according to the embodiments of the present disclosure, the parameters of the initial scheduling model are updated based on the branch penalty data in addition to the main reward data that aims at the minimum payment, to reduce the interference from the change in the state variable in the environment where the energy storage system is located. Therefore, the scheduling model can be trained excellently. The parameters of the scheduling model are updated iteratively based on the instant reward data including the main reward data and the branch penalty data, so that the scheduling model can converge with high precision quickly. Therefore, an excellent target scheduling model can be obtained.

For further details about the apparatus, reference can be made to the method embodiments. The modules in the apparatus may be implemented in whole or in part by software, hardware, or a combine of software and hardware. The modules may be embedded in or independent of a processor of a computer device in a hardware form, or may be stored in a memory of the computer device in a software form, for ease of being invoked by the processor to perform operations corresponding to the modules.

Corresponding to the foregoing embodiments, an electric device is provided according to embodiments of the present disclosure.

Figure 7 is a schematic structure diagram illustrating the electric device according to an embodiment of the present disclosure. As shown in Figure 7, the electric device includes a memory 704, a processor 702, and a program 706 stored in the memory 704 and executable by the processor 702. The program 706 is for training the scheduling model. When the processor 702 executes the program 706, the method for training the scheduling model according any one of the embodiments is implemented.

With the electric device according to the embodiments of the present disclosure, the processor 702 executes the program 706 to iteratively update the parameters of the scheduling model based on the instant reward including the main reward data and the branch penalty data. Therefore, the scheduling model can converge with high precision quickly.

Therefore, an excellent target scheduling model can be obtained.

Corresponding to the foregoing embodiments, a computer readable storage medium is further provided according to embodiments of the present disclosure. The computer readable storage medium stores a program for training the scheduling model that, when executed by the processor, implements the method for training the scheduling model according any one of the embodiments.

With the computer readable storage medium according to the embodiments of the present disclosure, the program, when executed by the processor, iteratively updates the parameters of the scheduling model based on the instant reward including the main reward data and the branch penalty data. Therefore, the scheduling model can converge with high precision quickly. Therefore, an excellent target scheduling model can be obtained.

It should be noted that, the logic and/or the steps illustrated in the flowcharts or described in other ways herein, for example, may be considered as a sequence list of executable instructions for realizing logic functions, and can be specifically implemented in any computer readable medium for the use by an instruction execution system, apparatus or device (e.g., a computer-based system, a system including a processor, or other system capable of reading instructions from the instruction execution system, apparatus or device and executing the instructions), or for the use in combination with the instruction execution system, apparatus or device. The "computer-readable medium" may be any device containing, storing, communicating, propagating or transmitting a program for use by the instruction execution system, apparatus or device or in combination with the instruction execution system, apparatus or device. More specific examples (i.e., a non-exhaustive list) of the computer-readable medium include: an electrical connection part (e.g., an electronic device) with one or more wires, a portable computer disk case (e.g., a magnetic device), a random-access memory (RAM), a read-only memory (ROM), an erasable programmable read-only memory (EPROM or a flash memory), a fiber optic device, and a portable compact disk read-only memory (CDROM). In addition, the computer readable medium may even be a piece of paper or other suitable medium on which the program is printed. This is because that the program can be obtained electronically, for example, by optically scanning the paper or the other medium followed by editing, interpreting or, if necessary, by other suitable processing, and then stored in the memory.

It should be understood that embodiments of the present disclosure may be implemented in hardware, software, firmware, or a combination thereof. In the above embodiments, steps or methods may be implemented by software or firmware stored in the memory and executed by a suitable instruction execution system. For example, the steps or methods are implemented in hardware, as the same in another embodiment, using any one or a combination of the following technologies known in the field: a logic circuit with a logic gate for implementing logic functions on a data signal, a specialized integrated circuit with a suitable combinational logic gate, a programmable gate array (PGA), a field programmable gate array (FPGA) and the like.

Throughout the description, the expressions "an embodiment", "some embodiments", "an example", "specific example " and "some examples", or the like indicate that features, structures, materials or characteristics described in the embodiments or examples are included in at least one embodiment or example of the present disclosure. In this description, schematic expressions of the above terms do not necessarily refer to the same embodiment or example. Furthermore, the specific features, structures, materials or characteristics described may be combined in any suitable manner in any one or more embodiments or examples.

It should be understood that the orientation or positional relationships indicated by terms such as "center", "longitudinal", "lateral", "length", "width", "thickness", "up", "down", "forward", "backward", "left", "right", "vertical", "horizontal", "top", "bottom", "inner", "outer", "clockwise", "anticlockwise", "axial", "radial", "circumferential" and the like are based on the orientation or positional relationships shown in the drawings, and are merely for the convenience of describing the present disclosure and the simplification of the description, instead of indicating or implying that the device or component referred must be arranged in a particular orientation, or be constructed and operated in a particular orientation, and therefore should not be construed as a limitation to the scope of the present disclosure.

Furthermore, the terms "first", "second" and the like in the embodiments of the present disclosure are merely for purpose of description, and should not be construed as indicating or implying relative importance or implying the number of the indicated technical features in the embodiments. Therefore, the feature defined by "first" or "second" in the embodiments of the present disclosure explicitly or implicitly indicates that there is at least one such feature included in the embodiments. In the description, the terms "multiple" means at least two or more than two, such as two, three, four and so on, unless specifically and clearly limited in the embodiments otherwise.

The terms "arrange", "link", "connect" and "fix" in the embodiments shall be understood in a broad sense unless otherwise expressly specified or limited in the embodiments. For example, the connection may be a fixed connection, a detachable connection, as a whole, a mechanical connection, an electrical connection and so on, a direct connection, an indirect connection through an intermediary component, inner communication between two components, or interaction between two components. The specific meaning of the foregoing terms in the present disclosure can be understood by those skilled in the art based on the specific implementation.

Unless expressly stated and limited otherwise, a first feature arranged "above" or "below" a second feature indicates that the first feature is or is not in contact with the second feature. Furthermore, the first feature arranged "on", "over" or "above" the second feature indicates that the first feature is directly above and obliquely above the second feature, or simply indicates that the first feature is higher than the second feature. The first feature arranged "beneath", "under" or "blow" the second feature indicates that the first feature is directly below and obliquely below the second feature, or simply indicates that the first feature is lower than the second feature.

Although the embodiments of the description have been illustrated and described above, it should be understood that the embodiments described above are only exemplary, and should not be understood as limitation for the description. Changes, modifications, substitutions and alternations can be made to the embodiments described above by those skilled in the art within the scope of the description.

**Claims**

1.  A method for training a scheduling model of an energy storage system, comprising:

    determining main reward data of the scheduling model based on payment data of the energy storage system for electricity in a period from a first moment to a second moment, wherein the first moment is earlier than the second moment;
    determining branch penalty data of the scheduling model based on deviation data of a charging-discharging action of the energy storage system in the period, wherein the deviation data of the charging-discharging action indicates to what extent the charging-discharging action matches a change in a state variable of the energy storage system; and
    updating parameters of the scheduling model based on the main reward data and the branch penalty data, to obtain a target scheduling model.

2.  The method according to claim 1, wherein the state variable comprises a state of charge variable, and wherein the method further comprises:
    determining deviation data of a state of charge action of the energy storage system between the first moment and the second moment based on first state of charge data of the state of charge variable at the first moment, second state of charge data of the state of charge variable at the second moment, and action data of an action variable of the energy storage system at the first moment, before the determining the branch penalty data, wherein the deviation data of the charging-discharging action comprises the deviation data of the state of charge action.

3.  The method according to claim 1, wherein the state variable comprises an actual electricity price variable, and wherein the method further comprises:
    determining deviation data of an electricity price action of the energy storage system between the first moment and the second moment based on first actual electricity price data of an actual electricity price variable at the first moment, second actual electricity price data of the actual electricity price variable at the second moment, and action data of an action variable of the energy storage system at the first moment, before the determining the branch penalty data, wherein the deviation data of the charging-discharging action comprises the deviation data of the electricity price action.

4.  The method according to claim 1, wherein the state variable comprises an actual electricity price variable and a prediction electricity price variable, and wherein the method further comprises:
    determining deviation data of an electricity price prediction action of the energy storage system between the first moment and the second moment based on prediction electricity price data of the prediction electricity price variable at the second moment, second actual electricity price data of the actual electricity price variable at the second moment, and action data of an action variable of the energy storage system at the first moment, before the determining the branch penalty data, wherein the deviation data of the charging-discharging action comprises the deviation data of the electricity price prediction action.

5.  The method according to claim 1, wherein the deviation data of the charging-discharging action comprises deviation data of a state of charge action, deviation data of an electricity price action and deviation data of an electricity price prediction action, and wherein the determining the branch penalty data comprises:
    acquiring a sum of the deviation data of the state of charge action multiplied by a first weight coefficient, the deviation data of the electricity price action multiplied by a second weight coefficient, and the deviation data of the electricity price prediction action multiplied by a third weight coefficient, as the branch penalty data.

6.  The method according to claim 1, wherein the state variable comprises an actual electricity price variable and a load power variable, and wherein the method further comprises:
determining the payment data based on first actual electricity price data of the actual electricity price variable at the first moment, a first load power of the load power variable at the first moment, a second load power of the load power variable at the second moment, and action data of an action variable of the energy storage system at the first moment, before the determining the main reward data.

7. The method according to any one of claims 1 to 6, wherein the determining the main reward data comprises:
performing a multiplication operation based on the payment data and a corresponding fourth weight coefficient, to obtain the main reward data.

8. The method according to any one of claims 1 to 6, wherein prediction electricity price data at the second moment is predicted by an electricity price prediction model, and wherein the electricity price prediction model is trained by:

constructing a training sample set for an electricity price, wherein the training sample set comprises a plurality of training samples each comprising previous electricity price data within a specified period of time, and the previous electricity price data has a plurality of feature variables comprising a daily maximum electricity price, a daily minimum electricity price, a daily average electricity price and a volatility in a daily electricity price; and
training an initial prediction model using the training sample set, to obtain the electricity price prediction model, wherein the initial prediction model is constructed using a long short-term memory network.

9. The method according to any one of claims 1 to 6, wherein the updating the parameters of the scheduling model comprises:
updating the parameters using a policy gradient and temporal difference learning by inputting the state variable and an action variable of the energy storage system into a value network and an action network of the scheduling model, aiming at maximizing a difference between the main reward data and the branch penalty data.

10. The method according to any one of claims 1 to 6, further comprising:

determining an objective function and a constraint for a minimum payment; and
constructing a reward function of proximal policy optimization based on the objective function and the constraint, wherein the reward function comprises a main reward function for outputting the main reward data and a branch penalty function for outputting the branch penalty data.

11. The method according to claim 10, wherein the constraint comprises a state of charge constraint and an actual output power constraint of the energy storage system, and wherein

the state of charge constraint is constructed based on a maximum state of charge and a minimum state of charge; and
the actual output power constraint is constructed based on an actual output power of the energy storage system being less than or equal to a rated power of the energy storage system.

12. An apparatus for training a scheduling model of an energy storage system power, comprising:

a main reward data determination module configured to determine main reward data of the scheduling model based on payment data of the energy storage system for electricity in a period from a first moment to a second moment, wherein the first moment is earlier than the second moment;
a branch penalty data determination module configured to determine branch penalty data of the scheduling model based on deviation data of a charging-discharging action of the energy storage system in the period, wherein the deviation data of the charging-discharging action indicates to what extent the charging-discharging action matches a change in a state variable of the energy storage system; and
a training module configured to update parameters of the scheduling model based on the main reward data and the branch penalty data, to obtain a target scheduling model.

13. An electric device, comprising:

a processor;
a memory; and
a computer program stored in the memory and executable by the processor, wherein the processor is configured to execute the computer program to implement the method according to any one of the claims 1 to 11.

14. A computer readable storage medium, comprising:
a computer program that, when executed, controls a device where the computer readable storage medium is arranged to perform the method according to any one of the claims 1 to 11.

**Figure 1a**

**Figure 1b**

Determine main reward data of a scheduling model based on payment data of the energy storage system for electricity in a period from a first moment to a second moment

S210

Determine branch penalty data of the scheduling model based on deviation data of a charging-discharging action of the energy storage system in the period

S220

Update parameters of the scheduling model based on the main reward data and the branch penalty data, to obtain a target scheduling model

S230

**Figure 2**

Construct a training sample set for an electricity price

S310

Train an initial prediction model, which is constructed using a long short-term memory network, using the training sample set, to obtain an electricity price prediction model

S320

**Figure 3**

Figure 4

Construct a training sample set for an electricity price

S510

Train an initial prediction model, which is constructed using a long short-term memory network, using the training sample set, to obtain an electricity price prediction model

S520

Determine an objective function and a constraint for a minimum payment

S530

Construct a reward function for proximal policy optimization based on the objective function and the constraint

S540

Determine main reward data of a scheduling model based on payment data of the energy storage system for electricity in a period from a first moment to a second moment

S550

Determine branch penalty data of the scheduling model based on deviation data of a charging-discharging action of the energy storage system in the period

S560

Update parameters of the scheduling model using the policy gradient and temporal difference learning by inputting a state variable and an action variable into a value network and an action network of the scheduling model, aiming at maximizing a difference between the main reward data and the branch penalty data

S570

**Figure 5**

Main reward data determination module — 610

Branch penalty data determination module — 620

Training module — 630

**Figure 6**

700

Electric device

Processor — 702

Memory — 704

706 — Program

**Figure 7**

Europäisches Patentamt
European Patent Office
Office européen des brevets

# EUROPEAN SEARCH REPORT

Application Number

EP 23 22 0518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/146996 A1 (SHIN CHEOL-HO [KR]) 12 May 2022 (2022-05-12) * abstract * * paragraphs [0056] – [0058], [0060], [0064], [0067], [0068], [0084], [0092] – [0094] * | 1-14 | INV. G06Q10/04 G06Q50/06 |
| A | WO 2012/145563 A1 (VIRIDITY ENERGY INC [US]; STEVEN ALAIN P [US] ET AL.) 26 October 2012 (2012-10-26) * abstract * * paragraphs [0037], [0038], [0043] – [0044], [0080], [0084], [0086] – [0088] * | 1-14 | |
| A | OH SEONGMUN ET AL: "A multi-use framework of energy storage systems using reinforcement learning for both price-based and incentive-based demand response programs", INTERNATIONAL JOURNAL OF ELECTRICAL POWER & ENERGY SYSTEMS, JORDAN HILL, OXFORD, GB, vol. 144, 10 August 2022 (2022-08-10), XP087184269, ISSN: 0142-0615, DOI: 10.1016/J.IJEPES.2022.108519 [retrieved on 2022-08-10] * abstract * * sections 3 and 4.5 * | 1-14 | |

TECHNICAL FIELDS SEARCHED (IPC)

G06Q

The present search report has been drawn up for all claims

| Place of search | Date of completion of the search | Examiner |
|---|---|---|
| Munich | 6 May 2024 | Moltenbrey, Michael |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

## ANNEX TO THE EUROPEAN SEARCH REPORT
## ON EUROPEAN PATENT APPLICATION NO.

EP 23 22 0518

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2024

| Patent document cited in search report | Publication date | Patent family member(s) | Publication date |
|---|---|---|---|
| US 2022146996 A1 | 12-05-2022 | KR 20220061709 A<br>US 2022146996 A1 | 13-05-2022<br>12-05-2022 |
| WO 2012145563 A1 | 26-10-2012 | NONE | |

EPO FORM P0459

For more details about this annex : see Official Journal of the European Patent Office, No. 12/82